(19) 

Europäisches
Patentamt
European
Patent Office
Office européen
des brevets

(11) **EP 2 910 524 A1**

(12) **EUROPEAN PATENT APPLICATION**
published in accordance with Art. 153(4) EPC

(43) Date of publication:
26.08.2015 Bulletin 2015/35

(21) Application number: 13846668.5

(22) Date of filing: 11.10.2013

(51) Int Cl.:
*C01B 31/04* (2006.01)          *C08F 2/44* (2006.01)
*C08K 9/04* (2006.01)          *C08L 101/00* (2006.01)

(86) International application number:
**PCT/JP2013/077789**

(87) International publication number:
**WO 2014/061598 (24.04.2014 Gazette 2014/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **19.10.2012 JP 2012232120**

(71) Applicant: **Sekisui Chemical Co., Ltd.
Osaka-shi, Osaka 530-8565 (JP)**

(72) Inventors:
• **INUI, Nobuhiko
Mishima-gun
Osaka 618-0021 (JP)**
• **SAWA, Kazuhiro
Mishima-gun
Osaka 618-0021 (JP)**

(74) Representative: **Ter Meer Steinmeister & Partner
Patentanwälte mbB
Nymphenburger Straße 4
80335 München (DE)**

(54) **METHOD FOR MANUFACTURING FLAKED GRAPHITE DERIVATIVE, AND METHOD FOR MANUFACTURING FLAKED GRAPHITE DERIVATIVE AND RESIN COMPOSITE MATERIAL**

(57)     There is provided a simple method for producing an exfoliated graphite derivative. A method for producing an exfoliated graphite derivative, comprising steps of providing a mixture comprising exfoliated graphite and a reactive compound to be grafted on the above exfoliated graphite by irradiation with active energy rays; and irradiating the above mixture with active energy rays to graft the above reactive compound on the above exfoliated graphite.

EP 2 910 524 A1

**Description**

Technical Field

The present invention relates to a simple method for producing an exfoliated graphite derivative, and a method for producing an exfoliated graphite-resin composite material.

Background Art

Conventionally, it has been known that by adding exfoliated graphite as a filler to a resin or the like, the mechanical strength of the resin is increased. However, the affinity of a resin for exfoliated graphite is low. Therefore, methods of modifying the surface of exfoliated graphite to provide an exfoliated graphite derivative to increase the affinity of a resin for exfoliated graphite are proposed. Examples of the methods for surface-modifying exfoliated graphite include a method of performing radical polymerization in a state in which graphene is dispersed in a radical polymerizable monomer to obtain a graphene composite in which the surface of graphene is modified, as disclosed in Non Patent Literature 1, and also include a method of halogenating the acidic functional group of graphite oxide and performing atom transfer radical polymerization as disclosed in Non Patent Literature 2.

Citation List

Non Patent Literature

Non Patent Literature 1: Jeffrey R. Potts, et al, Carbon, 49, Issue 8, 2615-2623
Non Patent Literature 2: Lee SH, Dreyer DR, et al. Macromol. Rapid Commun., 2010, 31, 281-8

Summary of Invention

Technical Problem

However, in the method disclosed in Non Patent Literature 1 or 2, a radical polymerization initiator such as a peroxide or an alkyl halide is necessary.
It is a main object of the present invention to provide a simple method for producing an exfoliated graphite derivative in which it is not always necessary to use a radical polymerization initiator.

Solution to Problem

A method for producing an exfoliated graphite derivative according to the present invention comprises steps of providing a mixture comprising a reactive compound to be grafted on the exfoliated graphite by irradiation with active energy rays; and irradiating the above mixture with active energy rays to graft the reactive compound on the exfoliated graphite.
In a particular aspect of the method for producing an exfoliated graphite derivative according to the present invention, the reactive compound comprises a functional group having reactivity with a resin.
In another particular aspect of the method for producing an exfoliated graphite derivative according to the present invention, the functional group having reactivity with a resin is at least one selected from the group consisting of a (meth)acrylic group, a vinyl group, a vinyl ether group, a glycidyl group, a thiol group, a halogen group, a carbonyl group, a carboxyl group, a sulfo group, an amino group, a hydroxy group, an oxime group, a nitrile group, an isocyanate group, a silyl group, and derivatives thereof.
In another particular aspect of the method for producing an exfoliated graphite derivative according to the present invention, the above reactive compound comprises a functional group having reactivity with exfoliated graphite.
In still another particular aspect of the method for producing an exfoliated graphite derivative according to the present invention, the above functional group having reactivity with exfoliated graphite is at least one selected from the group consisting of a (meth)acrylic group, a vinyl group, a vinylidene group, a vinylene group, an azo group, an azi group, a diazo group, a peroxy group, a ylide group, a halogen group, and derivatives thereof. The reactivity of these functional groups with exfoliated graphite increases remarkably by irradiation with active energy rays to generate a free radical.
In still another particular aspect of the method for producing an exfoliated graphite derivative according to the present invention, the radical reactive compound is a monomer or an oligomer.

In still another particular aspect of the method for producing an exfoliated graphite derivative according to the present invention, the above reactive compound is a radical reactive compound.

In still another particular aspect of the method for producing an exfoliated graphite derivative according to the present invention, the above active energy rays are electromagnetic waves. The above active energy rays are more preferably microwaves.

A method for producing an exfoliated graphite-resin composite material according to the present invention comprises steps of providing a mixture comprising exfoliated graphite and a reactive compound to be grafted on the above exfoliated graphite by irradiation with active energy rays; irradiating the above mixture with active energy rays to graft the above reactive compound on the above exfoliated graphite to obtain an exfoliated graphite derivative; and mixing the exfoliated graphite derivative and a resin.

Advantageous Effect of Invention

According to the present invention, it is possible to provide a simple method for producing an exfoliated graphite derivative in which it is not always necessary to use a radical polymerization initiator.

Brief Description of Drawings

[Figure 1] Figure 1 is the Raman spectrum of an exfoliated graphite derivative A obtained in Example 1.
[Figure 2] Figure 2 is the IR spectrum of an exfoliated graphite derivative A obtained in Example 1.

Description of Embodiments

A method for producing an exfoliated graphite derivative and a method for producing an exfoliated graphite-resin composite material according to the present invention will be described in detail below.

(Method for Producing Exfoliated Graphite Derivative)

The method for producing an exfoliated graphite derivative according to the present invention comprises the steps of providing a mixture comprising a reactive compound to be grafted on the above exfoliated graphite by irradiation with active energy rays; and irradiating the above mixture with active energy rays to graft the above reactive compound on the above exfoliated graphite.

The exfoliated graphite is obtained by subjecting graphite to exfoliation treatment. The exfoliated graphite can be obtained by known methods, for example, a chemical treatment method in which ions such as nitrate ions are inserted between the layers of graphite and then heat treatment is performed, a physical treatment method in which the application of ultrasonic waves or the like is performed, and an electrochemical method in which electrolysis is performed using graphite as a working electrode.

The exfoliated graphite is a graphene sheet stack thinner than the original graphite. The number of stacked graphene sheets in the exfoliated graphite is usually about several to 200.

The exfoliated graphite has a structure in which thin graphene sheets are stacked. Therefore, the aspect ratio of the exfoliated graphite is relatively large. In addition, the exfoliated graphite derivative of the present invention also has a relatively large aspect ratio like the exfoliated graphite that is a raw material. As described later, the exfoliated graphite derivative of the present invention is contained in the exfoliated graphite-resin composite material of the present invention. Therefore, by containing the exfoliated graphite derivative of the present invention in a resin, the mechanical strength of the resin against external force applied in the direction crossing the stacked surfaces of the exfoliated graphite derivative can be effectively increased. In the present invention, the aspect ratio refers to the ratio between the maximum dimension in the direction of the stacked surfaces of the exfoliated graphite or the exfoliated graphite derivative and the thickness of the exfoliated graphite or the exfoliated graphite derivative.

When the aspect ratio of the exfoliated graphite derivative is too low, the reinforcement effect against external force applied in the direction crossing the above stacked surfaces may not be sufficient. When the aspect ratio of the exfoliated graphite derivative is too high, the effect may be saturated so that a further reinforcement effect is not desired. Therefore, a preferred lower limit of the aspect ratio of the exfoliated graphite derivative and the exfoliated graphite that is a raw material is about 50, and a preferred upper limit is about 5000.

The maximum dimension in the direction of the stacked surfaces of the exfoliated graphite is preferably about 0.5 μm to 50 μm, more preferably about 1.0 μm to 10 μm. The thickness of the exfoliated graphite is preferably about 0.3 nm to 300 nm, more preferably about 10 nm to 100 nm.

The BET specific surface area of the exfoliated graphite is preferably about 30 m$^2$/g to 7000 m$^2$/g, more preferably about 100 m$^2$/g to 1000 m$^2$/g. When the BET specific surface area of the exfoliated graphite is in such a range, a high reinforcement effect is achieved.

In the present invention, the reactive compound refers to a compound to be grafted on the above exfoliated graphite by irradiation with active energy rays. The reactive compound preferably comprises a functional group having reactivity with the resin contained in the exfoliated graphite-resin composite material described later. Thus, the exfoliated graphite derivative is bonded to the resin in the exfoliated graphite-resin composite material. Therefore, the mechanical strength of the exfoliated graphite-resin composite material can be further increased.

The functional group having reactivity with the resin is preferably at least one selected from the group consisting of a (meth)acrylic group, a vinyl group, a vinyl ether group, a glycidyl group, a thiol group, a halogen group, a carbonyl group, a carboxyl group, a sulfo group, an amino group, a hydroxy group, an oxime group, a nitrile group, an isocyanate group, a silyl group, and derivatives thereof. These functional groups have relatively high reactivity and therefore can react well with a polymer to form a bond.

In addition, the above reactive compound preferably comprises a functional group having reactivity with exfoliated graphite because in this case, the reactive compound can be grafted on the exfoliated graphite much more efficiently.

The above functional group having reactivity with exfoliated graphite is preferably at least one selected from the group consisting of a (meth)acrylic group, a vinyl group, a vinylidene group, a vinylene group, an azo group, an azi group, a diazo group, a peroxy group, a ylide group, a halogen group, and derivatives thereof. The reactivity of these functional groups with exfoliated graphite increases remarkably by irradiation with active energy rays to generate a free radical.

Examples of the above reactive compound include N-(2-aminoethyl)glycine, 2,2'-azobis(2-amidinopropane) dihydrochloride, 4-nitrobenzenediazonium tetrafluoroborate, maleic anhydride, zidovusine, glycidyl methacrylate, and vinyl methacrylate. In addition, radical compounds, specific examples of which are shown below, are preferably used.

Specific examples of radical reactive compounds having an amino group include azodicarboamide and aminoazobenzene.

Specific examples of radical reactive compounds having a glycidyl group include glycidyl methacrylate, diepoxys such as octadiene diepoxide, vinyl alkyls such as 1,2-epoxyhexene, and vinyl ethers such as vinyl glycidyl ether.

Specific examples of radical reactive compounds having a carboxyl group include acrylic acid, vinyl alkyls such as 10-undecenoic acid, and 4,4-azobis(4-cyanovaleric acid).

Specific examples of radical reactive compounds having a nitrile group include azobisisobutyronitrile.

Specific examples of radical reactive compounds having a hydroxy group include vinyl alkyls such as 4-penten-2-ol, 2-hydroxyethyl acrylate, and ethylene glycol monovinyl ether.

Only one type of reactive compound may be used, or a plurality of types of reactive compounds may be used. The reactive compound may be a monomer, or an oligomer of the above reactive compound.

In the present invention, first, the above mixture of the exfoliated graphite and the reactive compound is obtained. The mixing ratio between the exfoliated graphite and the reactive compound can be appropriately adjusted depending on the mass ratio between the exfoliated graphite and the reactive compound in the exfoliated graphite derivative to be obtained.

The mass ratio between the exfoliated graphite and the reactive compound in the exfoliated graphite derivative is preferably in the range of about 1:10 to 10:1, more preferably in the range of about 1:3 to 3:1. When the mass ratio is in such a range, the exfoliated graphite derivative can be dispersed more uniformly in the resin in the exfoliated graphite-resin composite material described later. Therefore, the mechanical strength of the exfoliated graphite-resin composite material can be further increased.

Next, the mixture of the exfoliated graphite and the reactive compound is irradiated with active energy rays. Thus, the radical reactive compound is grafted on the exfoliated graphite. The mixture of the exfoliated graphite and the radical reactive compound preferably further comprises a solvent. Examples of the solvent include tetrahydrofuran (THF), N-methylpyrrolidone (NMP), N,N-dimethylformamide (DMF), and dimethyl sulfoxide (DMSO).

The above activation energy rays are not particularly limited, and electromagnetic waves, ultraviolet rays, heat, infrared rays, and heat can be used. Electromagnetic waves are preferred. Among them, microwaves are more preferably used. It is preferred to use microwaves because equipment such as a general microwave oven can be used, which is easy in terms of a process.

The microwave irradiation conditions can be appropriately set. In order to efficiently graft the reactive compound on the exfoliated graphite, the microwave frequency is preferably about 0.1 GHz to 40 GHz, more preferably about 1 GHz to 20 GHz. The microwave irradiation time is preferably about 1 second to 10 minutes, more preferably about 15 seconds to 3 minutes. The microwave irradiation may be continuously performed only once or may be performed a plurality of times. The microwave irradiation can be performed using, for example, a microwave oven.

In the present invention, it is not always necessary to use a radical polymerization initiator or the like in the grafting of the reactive compound on the exfoliated graphite. Therefore, the grafting of the reactive compound on the exfoliated graphite can be simply performed. In addition, the reactive compound can be grafted on the exfoliated graphite using active energy rays, and therefore, reactive compounds having various functional groups can be grafted on the exfoliated graphite.

(Method for Producing Exfoliated Graphite-Resin Composite Material)

The method for producing an exfoliated graphite-resin composite material according to the present invention comprises the steps of obtaining the above exfoliated graphite derivative; and mixing the exfoliated graphite derivative and a resin.

The above resin contained in the exfoliated graphite-resin composite material is not particularly limited, and various known resins can be used.

When, as a reactive compound, one comprising a functional group having reactivity with a resin is used in the step of obtaining the above exfoliated graphite derivative, the resin preferably has a functional group having reactivity with a functional group of the radical reactive compound. Such a functional group of the resin is preferably at least one selected from the group consisting of a (meth)acrylic group, a vinyl group, a vinyl ether group, a glycidyl group, a thiol group, a halogeno group, a carbonyl group, a carboxyl group, a sulfo group, an amino group, a hydroxy group, an oxime group, a nitrile group, an isocyanate group, a silyl group, and derivatives thereof.

As the resin, thermoplastic resins are used. An exfoliated graphite-resin composite material using a thermoplastic resin can be easily made into various molded articles under heating using various molding methods. Examples of the thermoplastic resins include polyethylene, polypropylene, polystyrene, polyacrylates, polyacrylonitrile, polyesters, polyamides, polyurethanes, polyethersulfones, polyetherketones, polyimides, polydimethylsiloxane, and copolymers thereof.

Particularly preferably, polyolefins can be used as the resin. Polyolefins are inexpensive and are easily molded under heating. Therefore, by using a polyolefin as the thermoplastic resin, the cost of the exfoliated graphite-resin composite material can be reduced, and the exfoliated graphite-resin composite material can be easily molded. The above polyolefins are not particularly limited. Examples of the above polyolefins include polyethylene, polypropylene, polyethylene-based resins such as ethylene homopolymers, ethylene-$\alpha$-olefin copolymers, ethylene-(meth)acrylic acid copolymers, ethylene-(meth)acrylate copolymers, and ethylene-vinyl acetate copolymers, polypropylene-based resins such as propylene homopolymers, propylene-$\alpha$-olefin copolymers, propylene-ethylene random copolymers, and propylene-ethylene block copolymers, butene homopolymers, and homopolymers or copolymers of conjugated dienes such as butadiene and isoprene. Further preferably, as the thermoplastic resin, more inexpensive polypropylene is used. The polyolefins may be modified with maleic acid, silane, or the like. Only one resin may be used, or a plurality of types of resins may be used.

In addition, a coupling agent may be further added to the resin. In this case, the modification of the functional group of the resin is further possible, and the types of graphene functional groups that can be bonded increase. As the above coupling agent, 3-aminopropyltriethoxysilane, titanium(IV) tetraisopropoxide, 3-glycidoxypropyltriethoxysilane, and the like can be used.

The blending ratio between the exfoliated graphite derivative and the resin is not particularly limited, and preferably, the exfoliated graphite derivative is in the range of 0.1 to 50 parts by mass based on 100 parts by mass of the resin. By setting the blending ratio in such a range, the mechanical strength such as tensile modulus of the exfoliated graphite-resin composite material of the present invention can be effectively increased. When the blending ratio of the exfoliated graphite derivative is less than 0.1 parts by mass, the mechanical strength of the exfoliated graphite-resin composite material may not be sufficiently increased. When the blending ratio of the exfoliated graphite derivative is more than 50 parts by mass, the exfoliated graphite-resin composite material may be brittle and crack easily.

The exfoliated graphite-resin composite material of the present invention may comprise various additives in a range that does not inhibit the object of the present invention. Examples of such additives can include phenolic, phosphorus-based, amine-based, or sulfur-based antioxidants or the like; benzotriazole-based or hydroxyphenyltriazine-based ultraviolet absorbing agents or the like; metal harm inhibitors; halogenated flame retardants such as hexabromobiphenyl ether or decabromodiphenyl ether; flame retardants such as ammonium polyphosphate or trimethyl phosphate; various fillers; antistatic agents; stabilizers; and pigments.

The present invention will be described in more detail below based on specific Examples. The present invention is not limited to the following Examples in any way and can be carried out by making appropriate changes without departing from the spirit thereof.

(Example 1)

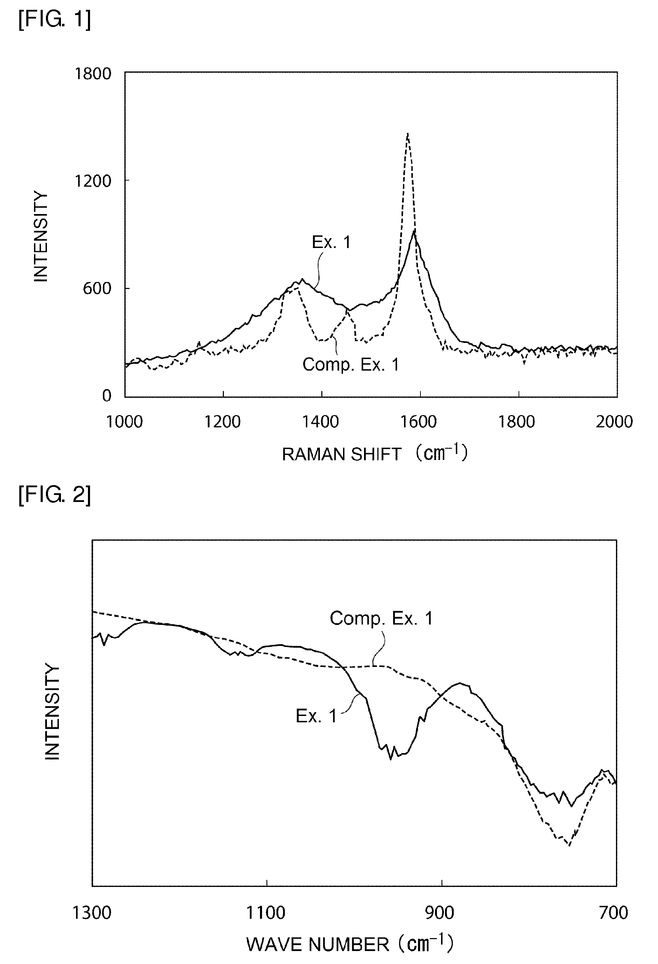

5 g of glycidyl methacrylate (manufactured by TOKYO CHEMICAL INDUSTRY CO., LTD.) and 2 g of exfoliated graphite were placed in a glass container and dispersed well. The exfoliated graphite was observed using a scanning electron microscope (SEM) before use. The maximum dimension in the plane direction of the layer surfaces was about 5.0 $\mu$m, the layer thickness was 30 nm, and the number of stacked layers of graphene was about 90. Next, the operation of irradiating the obtained dispersion with microwaves for 1 minute using a microwave oven at 100 W, and allowing it to cool to room temperature was repeated 10 times. The obtained sample was filtered, repeatedly washed using THF to completely remove the unreacted glycidyl methacrylate, and vacuum-dried to obtain an exfoliated graphite derivative A. The Raman spectrum and IR spectrum of the exfoliated graphite derivative A are shown in Figure 1 and Figure 2.

10 Parts by mass of the exfoliated graphite derivative A obtained above, 90 parts by mass of a polypropylene-based resin (trade name "J-721GR" manufactured by Prime Polymer Co., Ltd., tensile modulus at 23°C: 1.2 GPa), and 10 parts by mass of a maleic acid-modified polypropylene-based resin (trade name "ADMER QE800" manufactured by Mitsui Chemicals, Inc., tensile modulus at 23°C: 1.0 GPa) were fed to an extruder and melted and kneaded, and the obtained melted and kneaded material was extruded from a T die attached to the extruder tip, and sheet-molded by a cooling roll to obtain a sheet comprising a polyolefin-based resin composite material having a smooth surface and a thickness of 0.5 mm.

(Example 2)

0.25 g of a graphite single crystal powder was fed to 11.5 ml of 65% by mass concentrated sulfuric acid, and the obtained mixture was stirred while being cooled in a water bath at 10°C. Next, while 1.5 g of potassium permanganate was gradually added to the mixture obtained by stirring the concentrated sulfuric acid graphite single crystal powder and the concentrated sulfuric acid, the concentrated sulfuric acid mixture was stirred, and the mixture was reacted at 35°C over 30 minutes.

Next, 23 g of water was gradually added to the concentrated sulfuric acid reaction mixture, and the mixture was reacted at 98°C over 15 minutes. Thereafter, 70 g of water and 4.5 g of a 30% by mass hydrogen peroxide solution were added to the concentrated sulfuric acid reaction mixture to stop the reaction. The obtained graphite oxide mixture was stretched and centrifuged at a rotation speed of 14000 rpm over 30 minutes, and then, the obtained graphite oxide was sufficiently washed by using 5% by mass dilute hydrochloric acid and water and thereafter dried. The obtained graphite oxide was dispersed in water in an amount of 0.2 mg/ml, and then, the graphite oxide was irradiated with ultrasonic waves over 60 minutes using an ultrasonic cleaning machine under the conditions of 45 kHz and 100 W to exfoliate and fragment the graphite oxide between its layer interfaces to obtain exfoliated graphite whose layer surfaces were oxidized. Hydrazine was added to the obtained exfoliated graphite whose layer surfaces were oxidized, and the exfoliated graphite was subjected to reduction treatment over 3 minutes to obtain reduced exfoliated graphite. The BET specific surface area of the obtained exfoliated graphite was 450 $m^2$/g, and the average value of the size along the plane direction of the layer surfaces was 5 $\mu$m.

5 g of glycidyl methacrylate (manufactured by TOKYO CHEMICAL INDUSTRY CO., LTD.), 40 g of N-methylpyrrolidone (NMP), and 2 g of the above exfoliated graphite were placed in a glass container and dispersed well. Next, the operation of irradiating the obtained dispersion with microwaves for 20 seconds using a microwave oven at 750 W, and allowing it to cool to room temperature was repeated 10 times. The sample was filtered, repeatedly washed using THF to completely remove the unreacted glycidyl methacrylate, and vacuum-dried to obtain an exfoliated graphite derivative B.

10 Parts by mass of the exfoliated graphite derivative B obtained above, 90 parts by mass of a polypropylene-based resin (trade name "J-721GR" manufactured by Prime Polymer Co., Ltd., tensile modulus at 23°C: 1.2 GPa), and 10 parts by mass of a maleic acid-modified polypropylene-based resin (trade name "ADMER QE800" manufactured by Mitsui Chemicals, Inc., tensile modulus at 23°C: 1.0 GPa) were fed to an extruder and melted and kneaded, and the obtained melted and kneaded material was extruded from a T die attached to the extruder tip, and sheet-molded by a cooling roll to obtain a sheet comprising a polyolefin-based resin composite material having a smooth surface and a thickness of 0.5 mm.

(Example 3)

5 g of azodicarbonamide (trade name "VINYFOR AC#K3" manufactured by EIWA CHEMICAL IND. CO., LTD), 40 g of N,N-dimethylformamide (DMF), and 2 g of exfoliated graphite were placed in a glass container and dispersed well. The exfoliated graphite was observed using an SEM before use. The maximum dimension in the plane direction of the layer surfaces was about 5.0 $\mu$m, the layer thickness was about 30 nm, and the number of stacked layers of graphene was about 90. Next, the operation of irradiating the obtained sample with microwaves for 1 minute using a microwave oven at 400 W, and allowing it to cool to room temperature was repeated 10 times. The sample was filtered and repeatedly washed using DMF to completely remove the unreacted azodicarbonamide. Next, the sample was vacuum-dried to obtain an exfoliated graphite derivative C.

10 Parts by mass of the exfoliated graphite derivative C obtained above, 90 parts by mass of a polypropylene-based resin (trade name "J-721GR" manufactured by Prime Polymer Co., Ltd., tensile modulus at 23°C: 1.2 GPa), and 10 parts by mass of a maleic acid-modified polypropylene-based resin (trade name "ADMER QE800" manufactured by Mitsui Chemicals, Inc., tensile modulus at 23°C: 1.0 GPa) were fed to an extruder and melted and kneaded, and the obtained melted and kneaded material was extruded from a T die attached to the extruder tip, and sheet-molded by a cooling roll to obtain a sheet comprising a polyolefin-based resin composite material having a smooth surface and a thickness of 0.5 mm.

(Example 4)

5 g of N-(2-aminoethyl)glycine (manufactured by TOKYO CHEMICAL INDUSTRY CO., LTD.) was reacted with formaldehyde (manufactured by TOKYO CHEMICAL INDUSTRY CO., LTD.) to form azomethine ylide. Next, the obtained sample was placed in a flask and mixed with a dispersion obtained by dispersing 2 g of the same exfoliated graphite as Example 1 in 50 g of toluene. The flask containing the sample was provided with a reflux column, and the sample was reacted at 110°C for 5 hours. The sample was filtered and repeatedly washed using water to completely remove the unreacted compound. Next, the sample was vacuum-dried to obtain an exfoliated graphite derivative D.
10 Parts by mass of the exfoliated graphite derivative D obtained above, 90 parts by mass of a polypropylene-based resin (trade name "J-721GR" manufactured by Prime Polymer Co., Ltd., tensile modulus at 23°C: 1.2 GPa), and 10 parts by mass of a maleic acid-modified polypropylene-based resin (trade name "ADMER QE800" manufactured by Mitsui Chemicals, Inc., tensile modulus at 23°C: 1.0 GPa) were fed to μ PLASTOMILL and melted and kneaded, and the obtained melted and kneaded material was press-molded at 180°C for 3 minutes to obtain a sheet comprising a polyolefin-based resin composite material having a smooth surface and a thickness of 0.5 mm.

(Example 5)

5 g of 4-nitrobenzenediazonium tetrafluoroborate (manufactured by TOKYO CHEMICAL INDUSTRY CO., LTD.) and 2 g of the same exfoliated graphite as Example 1 were placed in a glass container and dispersed well. Next, the operation of irradiating the obtained sample with microwaves for 1 minute using a microwave oven at 400 W, and allowing it to cool to room temperature was repeated 10 times. Next, hydrogen was blown in the presence of a platinum catalyst, and the obtained sample was reduced over 1 hour. The sample was filtered and repeatedly washed using water to completely remove the unreacted compound. Next, the sample was vacuum-dried to obtain an exfoliated graphite derivative E.
10 Parts by mass of the exfoliated graphite derivative E obtained above, 90 parts by mass of a polypropylene-based resin (trade name "J-721GR" manufactured by Prime Polymer Co., Ltd., tensile modulus at 23°C: 1.2 GPa), and 10 parts by mass of a maleic acid-modified polypropylene-based resin (trade name "ADMER QE800" manufactured by Mitsui Chemicals, Inc., tensile modulus at 23°C: 1.0 GPa) were fed to μ PLASTOMILL and melted and kneaded, and the obtained melted and kneaded material was press-molded at 180°C for 3 minutes to obtain a sheet comprising a polyolefin-based resin composite material having a smooth surface and a thickness of 0.5 mm.

(Example 6)

5 g of 2,2'-azobis(2-amidinopropane) dihydrochloride (manufactured by Wako Pure Chemical Industries, Ltd.) was dissolved in 20 g of water in a glass container, and 40 g of N-methylpyrrolidone (NMP) and 2 g of the same exfoliated graphite as Example 1 were placed and dispersed well. Next, the operation of irradiating the obtained sample with microwaves for 30 seconds using a microwave oven at 750 W, and allowing it to cool to room temperature was repeated 10 times. The sample was filtered and repeatedly washed using water to completely remove the unreacted compound. The sample was vacuum-dried to obtain an exfoliated graphite derivative F.
10 Parts by mass of the exfoliated graphite derivative F obtained above, 90 parts by mass of a polypropylene-based resin (trade name "J-721GR" manufactured by Prime Polymer Co., Ltd., tensile modulus at 23°C: 1.2 GPa), and 10 parts by mass of a silane-modified polypropylene-based resin (trade name "XPM800HM" manufactured by Mitsubishi Chemical Corporation, tensile modulus at 23°C: 1.5 GPa) were fed to μ PLASTOMILL and melted and kneaded. 3-Aminopropyltriethoxysilane (trade name "KBE903" manufactured by Shin-Etsu Chemical Co., Ltd.) was further added, and the obtained mixture was kneaded. Next, the obtained kneaded material was press-molded at 180°C for 3 minutes to obtain a sheet comprising a polyolefin-based resin composite material having a smooth surface and a thickness of 0.5 mm. Then, the obtained sheet was impregnated with hot water at 80°C for 24 hours to complete the crosslinking reaction. Next, the surface was rinsed with ethanol, and then, the sheet was dried in a vacuum oven at 80°C for 24 hours.

(Example 7)

5 g of maleic anhydride, 40 g of N-methylpyrrolidone (NMP), and 2 g of the same exfoliated graphite as Example 1 were placed in a glass container and dispersed well. Next, the operation of irradiating the obtained sample with microwaves for 20 seconds using a microwave oven at 750 W, and allowing it to cool to room temperature was repeated 10 times. The sample was filtered and repeatedly washed using acetone to completely remove the unreacted maleic anhydride. The sample was vacuum-dried to obtain an exfoliated graphite derivative G.

10 Parts by mass of the exfoliated graphite derivative E obtained above, 90 parts by mass of a polypropylene-based resin (trade name "J-721GR" manufactured by Prime Polymer Co., Ltd., tensile modulus at 23°C: 1.2 GPa), and 10 parts by mass of a maleic acid-modified polypropylene-based resin (trade name "ADMER QE800" manufactured by Mitsui Chemicals, Inc., tensile modulus at 23°C: 1.0 GPa) were fed to μ PLASTOMILL and melted and kneaded. Titanium(IV) tetraisopropoxide (manufactured by TOKYO CHEMICAL INDUSTRY CO., LTD.) was further added, and the obtained mixture was kneaded. Next, the obtained kneaded material was press-molded at 180°C for 3 minutes to obtain a sheet comprising a polyolefin-based resin composite having a smooth surface and a thickness of 0.5 mm.

(Example 8)

5 g of zidovusine dissolved in water, 40 g of ethanol, and 2 g of the same exfoliated graphite as Example 1 were placed in a glass container and dispersed well. Next, the obtained sample was irradiated with ultraviolet rays for 10 minutes. The sample was filtered and repeatedly washed using ethanol to completely remove the unreacted zidopusine. The sample was vacuum-dried to obtain an exfoliated graphite derivative H.

10 Parts by mass of the exfoliated graphite derivative H obtained above, 90 parts by mass of a polypropylene-based resin (trade name "J-721GR" manufactured by Prime Polymer Co., Ltd., tensile modulus at 23°C: 1.2 GPa), and 10 parts by mass of a silane-modified polypropylene-based resin (trade name "XPM800HM" manufactured by Mitsubishi Chemical Corporation, tensile modulus at 23°C: 1.5 GPa) were fed to μ PLASTOMILL and melted and kneaded. Next, the obtained melted and kneaded material was press-molded at 180°C for 3 minutes to obtain a sheet comprising a polyolefin-based resin composite material having a smooth surface and a thickness of 0.5 mm. Then, the obtained sheet was impregnated with hot water at 80°C for 24 hours to complete the crosslinking reaction. Next, the surface was rinsed with ethanol, and then, the sheet was dried in a vacuum oven at 80°C for 24 hours.

(Comparative Example 1)

Unmodified exfoliated graphite A1 not microwave-irradiated was obtained as in Example 1 except that irradiation with microwaves was not performed. A sheet was obtained as in Example 1 except that this unmodified exfoliated graphite A1 was used.

(Comparative Example 2)

Unmodified exfoliated graphite B1 not microwave-irradiated was obtained as in Example 2 except that irradiation with microwaves was not performed. A sheet was obtained as in Example 2 except that this unmodified exfoliated graphite B1 was used.

(Comparative Example 3)

Unmodified exfoliated graphite C1 not microwave-irradiated was obtained as in Example 3 except that irradiation with microwaves was not performed. A sheet was obtained as in Example 3 except that this unmodified exfoliated graphite C1 was used.

(Comparative Example 4)

Unmodified exfoliated graphite D1 to which heat was not applied was obtained as in Example 4 except that heat was not applied. A sheet was obtained as in Example 4 except that this unmodified exfoliated graphite D1 was used.

(Comparative Example 5)

Unmodified exfoliated graphite E1 not microwave-irradiated was obtained as in Example 5 except that irradiation with microwaves was not performed. A sheet was obtained as in Example 5 except that this unmodified exfoliated graphite E1 was used.

(Comparative Example 6)

Unmodified exfoliated graphite F1 not microwave-irradiated was obtained as in Example 6 except that irradiation with microwaves was not performed. A sheet was obtained as in Example 6 except that this unmodified exfoliated graphite F1 was used.

(Comparative Example 7)

Unmodified exfoliated graphite G1 not microwave-irradiated was obtained as in Example 7 except that irradiation with microwaves was not performed. A sheet was obtained as in Example 7 except that this unmodified exfoliated graphite G1 was used.

(Comparative Example 8)

Unmodified exfoliated graphite H1 not ultraviolet-irradiated was obtained as in Example 8 except that irradiation with ultraviolet rays was not performed. A sheet was obtained as in Example 8 except that this unmodified exfoliated graphite H1 was used.

The details of the above Examples 1 to 8 and Comparative Examples 1 to 8 are shown in Table 1.

[Table 1]

| | Graphite | Reactive compound | Functional group-modified resin | Energy type | Reaction method |
|---|---|---|---|---|---|
| Ex. 1 | Exfoliated graphite (30nm) | Glycidyl methacrylate | Maleic anhydride-modified PP | Microwaves | Radical addition |
| Ex. 2 | Hummers (450m$^2$/g) | Glycidyl methacrylate | Maleic anhydride-modified PP | Microwaves | Radical addition |
| Ex. 3 | Exfoliated graphite (30nm) | ADCA | Maleic anhydride-modified PP | Microwaves | Radical addition |
| Ex. 4 | Exfoliated graphite (30nm) | N-(2-Aminoethyl)glycine/formamide | Maleic anhydride-modified PP | Heat | Prato reaction (addition-cyclization reaction) |
| Ex. 5 | Exfoliated graphite (30nm) | 4-Nitrobenzenediazonium tetrafluoroborate catalytic hydrogenation | Maleic anhydride-modified PP | Microwaves | Diazonium coupling |
| Ex. 6 | Exfoliated graphite (30nm) | 2,2'-Azobis(2-amidinopropane) dihydrochloride/ 3-aminopropyltriethoxysilane | Silane-modified PP | Microwaves | Radical addition |
| Ex. 7 | Exfoliated graphite (30nm) | Maleic anhydride/titanium(IV) tetraisopropoxide | Maleic anhydride-modified PP | Microwaves | Diels-Alder reaction (addition-cyclization reaction) |
| Ex. 8 | Exfoliated graphite (30nm) | Zidopusine | Silane-modified PP | Ultraviolet rays | Nitrene addition |
| Comp.Ex 1 | Exfoliated graphite (30nm) | Glycidyl methacrylate | Maleic anhydride-modified PP | | |
| Comp.Ex.2 | Hummers (450m$^2$/g) | Glycidyl methacrylate | Maleic anhydride-modified PP | | |
| Comp.Ex.3 | Exfoliated graphite (30nm) | ADCA | Maleic anhydride-modified PP | | |
| Comp.Ex.4 | Exfoliated graphite (30nm) | N-(2-Aminoethyl)glycine/formamide | Maleic anhydride-modified PP | | |
| Comp.Ex.5 | Exfoliated graphite (30nm) | 4-Nitrobenzenediazonium tetrafluoroborate catalytic hydrogenation | Maleic anhydride-modified PP | | |
| Comp.Ex.6 | Exfoliated graphite (30nm) | 2,2'-Azobis(2-amidinopropane) dihydrochloride/ 3-aminopropyltriethoxysilane | Silane-modified PP | | |

(continued)

| | Graphite | Reactive compound | Functional group-modified resin | Energy type | Reaction method |
|---|---|---|---|---|---|
| Comp.Ex.7 | Exfoliated graphite (30nm) | Maleic anhydride/titanium(IV) tetraisopropoxide | Maleic anhydride-modified PP | | |
| Comp.Ex.8 | Exfoliated graphite (30nm) | Zidopusine | Silane-modified PP | | |

(Evaluation of Examples and Comparative Examples)

The grafting ratios of the exfoliated graphite derivatives contained in the sheets obtained in Examples 1 to 8, and the tensile moduli obtained in Examples 1 to 8 and Comparative Examples 1 to 8 were measured by the following procedures.

(1) Grafting Ratio Measurement

Each of the sheets obtained in the Examples and the Comparative Examples was cut small and wrapped in filter paper, and the filter paper was folded so that the contents did not leak out. Further, its periphery was sealed by a metal clip. Then, immersing the obtained sample in an excess amount of a good solvent for 12 hours to dissolve and remove the non-graftable resin followed by vacuum drying was repeated three times. The obtained sample was vacuum-dried to isolate and recover the exfoliated graphite derivative. The exfoliated graphite derivative that was purified was subjected to TGA measurement at 30 to 600°C and 10°C/min under an air atmosphere, and the grafting ratio was obtained by the following formula with the amount of the decomposition product to 500°C being A wt%, and the amount of the undecomposed residue being B wt%.

$$\texttt{grafting ratio (wt\%) = A/B} \times \texttt{100}$$

The good solvent as referred to here is not particularly limited as long as it is a general solvent that dissolves the desired resin. Examples of the good solvent for olefin-based resins can include 130°C hot xylene. Examples of the good solvent for acrylic resins such as PMMA can include acetone and dichlorobenzene. Examples of the good solvent for polyamide-based resins such as nylon can include 200°C hot benzyl alcohol and 200°C hot nitrobenzene. Examples of the good solvent for polystyrene-based resins can include THF and dichlorobenzene. Examples of the good solvent for polycarbonate-based resins can include THF and dichloromethane.

(2) Tensile Modulus Measurement

The tensile moduli at 23°C of the sheets obtained in the Examples and the Comparative Examples were measured according to JIS K6767.
The measurement results of the grafting ratios and the tensile moduli are shown in Table 2 and Table 3.

[Table 2]

| | | | | Ex. 1 | Ex. 2 | Ex. 3 | Ex. 4 | Ex. 5 | Ex. 6 | Ex. 7 | Ex. 8 |
|---|---|---|---|---|---|---|---|---|---|---|---|
| Resins | PP | J-721GR | (phr) | 90 | 90 | 90 | 90 | 90 | 90 | 90 | 90 |
| | ma-PP | QE800 | | 10 | 10 | 10 | 10 | 10 | | 10 | |
| | Si-PP | XPM800HM | | | | | | | 10 | | 10 |
| Coupling agents | 3-Aminopropyltriethoxysilane | | | | | | | | 1.5 | | |
| | Titanium(IV) tetraisopropoxide | | | | | | | | | 1.5 | |
| Fillers | Modified exfoliated graphite A | | (phr) | 10 | | | | | | | |
| | Modified exfoliated graphite B | | | | 10 | | | | | | |
| | Modified exfoliated graphite C | | | | | 10 | | | | | |
| | Modified exfoliated graphite D | | | | | | 10 | | | | |
| | Modified exfoliated graphite E | | | | | | | 10 | | | |
| | Modified exfoliated graphite F | | | | | | | | 10 | | |
| | Modified exfoliated graphite G | | | | | | | | | 10 | |
| | Modified exfoliated graphite H | | | | | | | | | | 10 |
| | Unmodified exfoliated graphite A1 | | (phr) | | | | | | | | |
| | Unmodified exfoliated graphite B1 | | | | | | | | | | |
| | Unmodified exfoliated graphite C1 | | | | | | | | | | |
| | Unmodified exfoliated graphite D1 | | | | | | | | | | |
| | Unmodified exfoliated graphite E1 | | | | | | | | | | |
| | Unmodified exfoliated graphite F1 | | | | | | | | | | |
| | Unmodified exfoliated graphite G1 | | | | | | | | | | |
| | Unmodified exfoliated graphite H1 | | | | | | | | | | |
| Physical properties | Grafting ratio | | (wt%) | 47 | 59 | 51 | 45 | 48 | 50 | 47 | 50 |
| | Tensile modulus | | (GPa) | 3.5 | 4.1 | 3.7 | 3.4 | 3.6 | 3.7 | 3.5 | 3.7 |

[Table 3]

| | | | | Comp. Ex. 1 | Comp. Ex. 2 | Comp. Ex. 3 | Comp. Ex. 4 | Comp. Ex. 5 | Comp. Ex. 6 | Comp Ex. 7 | Comp. Ex. 8 |
|---|---|---|---|---|---|---|---|---|---|---|---|
| Resins | PP | J-721GR | (phr) | 90 | 90 | 90 | 90 | 90 | 90 | 90 | 90 |
| | ma-PP | QE800 | | 10 | 10 | 10 | 10 | 10 | | 10 | |
| | Si-PP | XPM800HM | | | | | | | 10 | | 10 |
| Coupling agents | 3-Aminopropyltriethoxysilane | | | | | | | | 1.5 | | |
| | Titanium(IV) tetraisopropoxide | | | | | | | | | 1.5 | |
| Fillers | Modified exfoliated graphite A | | (phr) | | | | | | | | |
| | Modified exfoliated graphite B | | | | | | | | | | |
| | Modified exfoliated graphite C | | | | | | | | | | |
| | Modified exfoliated graphite D | | | | | | | | | | |
| | Modified exfoliated graphite E | | | | | | | | | | |
| | Modified exfoliated graphite F | | | | | | | | | | |
| | Modified exfoliated graphite G | | | | | | | | | | |
| | Modified exfoliated graphite H | | | | | | | | | | |
| | Unmodified exfoliated graphite A1 | | (phr) | 10 | | | | | | | |
| | Unmodified exfoliated graphite B1 | | | | 10 | | | | | | |
| | Unmodified exfoliated graphite C1 | | | | | 10 | | | | | |
| | Unmodified exfoliated graphite D1 | | | | | | 10 | | | | |
| | Unmodified exfoliated graphite E1 | | | | | | | 10 | | | |
| | Unmodified exfoliated graphite F1 | | | | | | | | 10 | | |
| | Unmodified exfoliated graphite G1 | | | | | | | | | 10 | |
| | Unmodified exfoliated graphite H1 | | | | | | | | | | 10 |

14

(continued)

| Physical properties | | | Comp. Ex. 1 | Comp. Ex. 2 | Comp. Ex. 3 | Comp. Ex. 4 | Comp. Ex. 5 | Comp. Ex. 6 | Comp Ex. 7 | Comp. Ex. 8 |
|---|---|---|---|---|---|---|---|---|---|---|
| | Grafting ratio | (wt%) | 0 | 0 | 0 | o | 0 | 0 | 0 | 0 |
| | Tensile modulus | (GPa) | 1.8 | 2.0 | 1.8 | 1.7 | 1.8 | 2.0 | 1.8 | 2.0 |

**Claims**

1. A method for producing an exfoliated graphite derivative, comprising steps of:

   providing a mixture comprising exfoliated graphite and a reactive compound to be grafted on the exfoliated graphite by irradiation with active energy rays; and
   irradiating the mixture with active energy rays to graft the reactive compound on the exfoliated graphite.

2. The method for producing an exfoliated graphite derivative according to claim 1, wherein the reactive compound comprises a functional group having reactivity with a resin.

3. The method for producing an exfoliated graphite derivative according to claim 2, wherein the functional group having reactivity with a resin is at least one selected from the group consisting of a (meth)acrylic group, a vinyl group, a vinyl ether group, a glycidyl group, a thiol group, a halogen group, a carbonyl group, a carboxyl group, a sulfo group, an amino group, a hydroxy group, an oxime group, a nitrile group, an isocyanate group, a silyl group, and derivatives thereof.

4. The method for producing an exfoliated graphite derivative according to any one of claims 1 to 3, wherein the reactive compound comprises a functional group having reactivity with exfoliated graphite.

5. The method for producing an exfoliated graphite derivative according to claim 4, wherein the functional group having reactivity with exfoliated graphite is at least one selected from the group consisting of a (meth)acrylic group, a vinyl group, a vinylidene group, a vinylene group, an azo group, an azi group, a diazo group, a peroxy group, a ylide group, a halogen group, and derivatives thereof.

6. The method for producing an exfoliated graphite derivative according to any one of claims 1 to 5, wherein the reactive compound is a monomer or an oligomer.

7. The method for producing an exfoliated graphite derivative according to any one of claims 1 to 6, wherein the reactive compound is a radical reactive compound.

8. The method for producing an exfoliated graphite derivative according to any one of claims 1 to 7, wherein the active energy rays are electromagnetic waves.

9. The method for producing an exfoliated graphite derivative according to any one of claims 1 to 8, wherein the active energy rays are microwaves.

10. A method for producing an exfoliated graphite-resin composite material, comprising steps of:

    providing a mixture comprising exfoliated graphite and a reactive compound to be grafted on the exfoliated graphite by irradiation with active energy rays;
    irradiating the mixture with active energy rays to graft the reactive compound on the exfoliated graphite to obtain an exfoliated graphite derivative; and
    mixing the exfoliated graphite derivative and a resin.

[FIG. 1]

[FIG. 2]

## INTERNATIONAL SEARCH REPORT

| International application No. |
| --- |
| PCT/JP2013/077789 |

| A. CLASSIFICATION OF SUBJECT MATTER |
| --- |
| C01B31/04(2006.01)i, C08F2/44(2006.01)i, C08K9/04(2006.01)i, C08L101/00 (2006.01)i |

According to International Patent Classification (IPC) or to both national classification and IPC

| B. FIELDS SEARCHED |
| --- |

Minimum documentation searched (classification system followed by classification symbols)
C01B31/00-31/36, C08F2/44, C08K9/04, C08L101/00

Documentation searched other than minimum documentation to the extent that such documents are included in the fields searched
Jitsuyo Shinan Koho          1922-1996   Jitsuyo Shinan Toroku Koho   1996-2014
Kokai Jitsuyo Shinan Koho    1971-2014   Toroku Jitsuyo Shinan Koho   1994-2014

Electronic data base consulted during the international search (name of data base and, where practicable, search terms used)
JSTPlus(JDreamIII), JST7580(JDreamIII), JSTChina(JDreamIII)

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | WO 2012/105344 A1  (Sekisui Chemical Co., Ltd.), 09 August 2012 (09.08.2012), paragraphs [0004], [0023] to [0036], [0086] to [0124] & JP 5082020 B | 1-8,10<br>9 |
| X<br>Y | XU, C. et al., "Synthesis of hemin functionalized graphene and its application as a conter electrode in dye-sensitized solar cells", Mater. Chem. Phys., 2012.02.15, Vol. 132, pp. 858-864 | 1,2,4,6,8,9<br>9 |
| X | REN, P.-G. et al., "Improved properties of highly oriented graphene/polymer nanocomposites", J. Appl. Polym. Sci., 2011.04.06, Vol. 121, pp. 3167-3174 | 1-4,6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 January, 2014 (07.01.14) | 14 January, 2014 (14.01.14) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

International application No.

PCT/JP2013/077789

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2012-500179 A  (William Marsh Rice University),<br>05 January 2012 (05.01.2012),<br>example 7<br>& JP 2012-527396 A       & JP 2012-530044 A<br>& US 2010/0105834 A1    & US 2012/0129736 A1<br>& US 2012/0063988 A1    & US 2012/0142111 A1<br>& US 2012/0197051 A1    & EP 2327085 A<br>& EP 2432733 A          & EP 2443062 A<br>& WO 2010/022164 A1     & WO 2011/016889 A2<br>& WO 2010/096665 A1     & WO 2010/147859 A1<br>& WO 2010/147860 A1     & KR 10-2011-0050523 A<br>& TW 201012749 A        & CA 2762430 A<br>& SG 176174 A           & KR 10-2012-0030446 A<br>& MX 2011012432 A       & CN 102803135 A<br>& CA 2765492 A          & SG 176826 A<br>& KR 10-2012-0039634 A  & MX 2011013545 A<br>& CN 102666378 A | 1,2,4-6 |
| P,X | JP 2013-112590 A  (Sekisui Chemical Co., Ltd.),<br>10 June 2013 (10.06.2013),<br>paragraphs [0036] to [0044]<br>& WO 2013/080843 A1 | 1,2,4,6,10 |
| E,X | JP 5352028 B1  (Sekisui Chemical Co., Ltd.),<br>27 November 2013 (27.11.2013),<br>paragraphs [0107] to [0156]<br>(Family: none) | 1,2,4,6,10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JEFFREY R. POTTS et al.** *Carbon,* vol. 49 (8), 2615-2623

- **LEE SH ; DREYER DR et al.** *Macromol. Rapid Commun.,* 2010, vol. 31, 281-8